# EUROPÄISCHE PATENTANMELDUNG

(11) **EP 2 383 312 A1**
(43) Veröffentlichungstag der Anmeldung: **02.11.2011**
(21) Anmeldenummer: 11173058.6
(22) Anmeldetag: 10.09.2007
(51) Int. Cl.: C09D 4/00

(54) **Silanbeschichtungsmaterial und Verfahren zur Herstellung einer Silanbeschichtung**

(30) Priorität: 18.09.2006 DE 102006044310
(62) Teilanmeldung aus: 07801334.9
(71) Anmelder: Nano-X GmbH, 66130 Saarbrücken (DE)
(72) Erfinder: Sepeur, Stefan, 66787 Wadgassen (DE); Laryea, Nora, 66113 Saarbrücken (DE); Thurn, Carolin, 66787 Wadgassen (DE); Schlick, Gerd, 57800 Freyming-Merlebach (FR)
(74) Vertreter: Teipel, Stephan

(57) **Zusammenfassung**

Die Erfindung betrifft ein Silanbeschichtungsmaterial und ein Verfahren zur Herstellung eines Silanbeschichtungsmaterials. Um ein Silanbeschichtungsmaterial gemäß dem Oberbegriff zu schaffen, bei der die oben geschilderten Nachteile vermieden werden, wird erfindungsgemäß ein Verfahren zum Herstellen einer Silanbeschichtung vorgeschlagen, wobei ein oder mehrere Silane, die nicht oder nur geringfügig vorkondensiert sind, mit einem Reaktionspartner versetzt werden, dann das so entstandene Beschichtungsmaterial auf ein Substrat appliziert und gehärtet wird. Überraschenderweise hat sich gezeigt, daß durch die Reaktion höhermolekularer und allenfalls geringfügig vorvernetzter Silane und geeigneter Reaktionspartner eine neue Klasse von Beschichtungsmaterialien geschaffen werden kann.; Silane werden gemäß dem Stand der Technik über Sol-Gel-Prozesse verarbeitet, wobei von vorkondensierten Spezies ausgegangen wird. Die erfindungsgemäße Vorgehensweise ist demgegenüber insofern vorteilhaft, als keine Restriktionen hinsichtlich der Topfzeit mehr vorliegen und zudem bessere Eigenschaften des Beschichtungsmaterials erreicht werden, insbesondere eine hohe Kratzfestigkeit.

## Beschreibung

Die Erfindung betrifft ein Silanbeschichtungsmaterial und ein Verfahren zur Herstellung einer Silanbeschichtung.

Es sind Silanbeschichtungen bekannt, die aus Silikonharzen hergestellt werden. Dazu werden Bausteinmoleküle wie Dimethylsiloxan oder anders organisch modifizierte homologe Spezies vorkondensiert, bis hochmolekulare Harze vorliegen. Diese können dann durch handelsübliche Starter gehärtet werden. Einsatz finden solche Systeme als Beschichtungen, Bautenschutzmittel, Dichtstoffe, usw.

Um diese Systeme in einer beschichtungsfähigen Form zu halten, und damit keine Gelbildung erfolgt, werden im allgemeinen Silane mit zwei organisch modifizierten Seitenketten eingesetzt.

Diese Schichtsysteme haben hohe Temperaturbeständigkeit, zeigen aber meist nur moderate Abriebbeständigkeiten.

Drei- und vierfachvernetztbare Silane werden durch den Sol-Gel Prozess in eine verarbeitungsfähige Form gebracht. Bei diesem Prozess werden Silane wie Tetraethoxysilan (TEOS) oder Methyltriethoxysilan (MTEOS), aber auch organisch modifizierte Silane wie Glycidoxypropyltriethoxysilan (GPTES, Glyeo) oder Methacrylpropyltrimethoxysilan (MPTS) usw. bei Anwesenheit eines Katalysators mit Wasser hydrolysiert und vorkondensiert. Es entsteht ein beschichtungsfähiges Sol, das nach Applikation und Härtung dann als Beschichtung auf einer Oberfläche aufgetragen werden kann.

Es ergibt sich hierdurch ein zusätzliches organisches Netzwerk und die Beschichtungen sind im Allgemeinen sowohl kratzfest als auch hochvernetzt und chemikalienbeständig.

Allerdings entstehen bei der Synthese niedermolekulare Alkohole, wie Methanol und Ethanol, die einen niedrigen Flammpunkt aufweisen und schwierig zu entfernen sind. Diese können wie in der DE 198 16 136 A1 beschrieben abrotiert werden oder über Phasentrennung abgetrennt werden, wie in der DE 100 63 519 A1 beschrieben. Problematisch ist weiterhin die eingeschränkte Topfzeit, die sich dadurch ergibt, daß die Kondensationsreaktionen unkontrolliert weiterlaufen.

Aufgabe der Erfindung ist es somit, ein Verfahren zum Herstellen einer Silanbeschichtung gemäß dem Oberbegriff zu schaffen, bei der die oben geschilderten Nachteile vermieden werden.

Diese Aufgabe wird erfindungsgemäß durch ein Verfahren zur Herstellung einer Silanbeschichtung gelöst, wobei ein oder mehrere Silane, die nicht oder nur geringfügig vorkondensiert sind, mit einem Reaktionspartner versetzt werden und dann das so entstandene Beschichtungsmaterial auf ein Substrat appliziert und gehärtet wird.

Überraschenderweise hat sich gezeigt, daß durch die Reaktion höhermolekularer und allenfalls geringfügig vorvernetzter Silane und geeigneter Reaktionspartner eine neue Klasse von Beschichtungsmaterialien geschaffen werden kann. Silane werden gemäß dem Stand der Technik über Sol-Gel-Prozesse verarbeitet, wobei von vorkondensierten Spezies ausgegangen wird. Die erfindungsgemäße Vorgehensweise, bei der eine Vorkondensationsreaktion weitgehend oder völlig vermieden wird, ist demgegenüber insofern vorteilhaft, als keine Restriktionen hinsichtlich der Topfzeit mehr vorliegen und zudem bessere Eigenschaften des Beschichtungsmaterials erreicht werden, insbesondere eine hohe Kratzfestigkeit.

Erfindungsgemäß ist vorgesehen, daß die Molekülmasse des bzw. der Silane größer als 200, insbesondere größer als 300, bevorzugt größer als 500 und besonders bevorzugt größer als 1.000 ist.

Es ist von Bedeutung, daß die Molmasse der Silane hoch ist, so daß die Reaktion auf einer Oberfläche gestartet werden kann, ohne daß die unkondensierten Silane abdampfen.

Es liegt im Rahmen der Erfindung, daß das bzw. die Silane in organischen Seitenketten polarisierte Gruppen aufweisen, die sich zur Ausbildung von Wasserstoffbrückenbindungen eignen.

Ebenfalls ist erfindungsgemäß, daß der Dampfdruck des bzw. der Silane kleiner als 2, vorzugsweise kleiner als 1 und besonders bevorzugt kleiner als 0,5 hPa bei 20°C ist.

Es kann daher zweckmäßig sein, daß vor dem Härten das bzw. die Silane eine organische Vernetzungsreaktion mit homologen oder nichthomologen Silanen oder mit organischen Monomeren, Oligomeren oder Polymeren durchlaufen.

Hierunter wird eine organische Vernetzung zwischen zwei Silanen oder zwischen Silanen und organischen Molekülen über die organischen Funktionen verstanden, wodurch höhermolekulare Silane entstehen.

Es ist beispielsweise möglich, daß das bzw. die Silane mit Diolen oder Polyolen vorvernetzte Isocyanosilane sind.

In diesem Zusammenhang ist es bevorzugt, daß die organische Molekülmasse größer ist als die anorganische.

Als Silane kommen insbesondere die folgenden in Frage: 3-Aminopropyltriethoxysilan, Aminoethylaminpropyltrimethoxysilan, Aminoethylaminopropyltrimethoxysilan, Aminoethylaminopropylsilan, 3-Aminopropyltrimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyldimethoxysilan, N-Cyclohexyl-3-aminopropyltrimethoxysilan, Benzylaminoethylaminopropyltrimethoxysilan, Vinylbenzylaminoethylaminopropyltrimethoxysilan, Vinyltrimethoxysilan, Vinyltriethoxysilan, Vinyldimethoxymethylsilan, Vinyl(tris)methoxyethoxy)silan, Vinylmethoxymethylsilan, Vinyltris(2-methoxyethoxy)silan, Vinyltriacetoxysilan, Methyltrimethoxysilan, n-Hexyltrimethoxysilan, n-Octyltriethoxysilan, Propyltrimethoxysilan, Propyltriethoxysilan, t-Butyltrimethoxysilan, Isobutyltriethoxysilan, Chloropropyltrimethoxysilan, 3-Glycidoxypropyltrimethoxysilan, 3 -Glycidoxypropyltriethoxysilan Glycidoxypropylmethyldiethoxysilan, Phenyltrimethoxysilan, Phenyltriethoxysilan, Mercaptopropyltrimethoxysilan, Bis-Triethoxysilylpropyldisulfidosilan, Bis-Triethoxysilylpropyldisulfidosilan, Bis-Triethoxysilylpropyltetroasulfidosilan, Tetraethoxysilan, N-Cyclohexylaminomethylmethyldieethoxysilan, N-Cyclohexylaminomethyltriethoxysilan, N-Phenylaminomethyltrimethoxysilan, (Methacryloxymethyl)methyldimethoxysilan, Methacryloxymethyltrimethoxysilan, (Methacryloxymethyl)methyldiethoxysilan, Methacryloxymethyltriethoxysilan, 3-Methacryloxypropyltrimethoxysilan, 3-Methacryloxypropyltrimethoxysilan, 3-Methacryloxypropyltriacetoxysilan, (Isocyanatomethyl)methyldimethoxysilan, 3-Isocyanatopropyltrimethoxysilan, 3-Trimethoxysilylmethyl-O-methylcarbamat, N-Dimethoxy-(methyl)silylmethyl-O-methyl-carbamat, 3-(Triethoxysilyl)propylbernsteinsäureanhydrid, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Octadecyl)methyldimethoxysilan, Phenyltriethoxysilan, (Cyclohexyl)methyldimethoxysilan, Dicyclopentyldimethoxysilan und Tetraethylsilikat.

Es liegt im Rahmen der Erfindung, daß der Wassergehalt maximal 5 %, vorzugsweise maximal 1% beträgt und besonders bevorzugt die Reaktion ohne Anwesenheit von Wasser durchgeführt wird.

In der Regel ist die Luftfeuchtigkeit für die Reaktion nicht störend.

Weiterhin ist vorgesehen, daß das bzw. die Silane maximal zu 5 %, bevorzugt maximal zu 1 % und besonders bevorzugt nicht anorganisch vorvernetzt sind.

Zur Erfindung gehörig ist auch, daß als Reaktionspartner bis zu 20 %, bevorzugt 0,5 bis 50 Gew.-% Lewissäuren oder Lewisbasen, insbesondere in Form von Übergangsmetallkomplexen, -salzen oder -partikeln, bevorzugt Mikro- oder Nanopartikeln verwendet werden.

In diesem Zusammenhang wird bevorzugt, daß die Übergangsmetallkomplexe, -salze oder - partikel Titan-, Aluminium-, Zinn- oder Zirkoniumkomplexe sind.

Weiterhin kann vorgesehen sein, daß als Füllstoffe Partikel, insbesondere Mikro-, Submikrooder Nanopartikel zugegeben werden.

Eine Ausbildung der Erfindung besteht darin, daß Lösungsmittel, insbesondere Alkohole, Acetate, Äther oder Reaktionsverdünner zugesetzt werden.

Ebenfalls liegt es im Rahmen der Erfindung, daß Mattierungsstoffe, Netzdispergiermittel, Entschäumer, Wachse, Biozide, Konservierungsmittel oder Farbpigmente zugesetzt werden.

Eine Weiterbildung der Erfindung besteht darin, daß das Beschichtungsmaterial naßchemisch, insbesondere durch Sprühen, Tauchen, Fluten, Rollen, Streichen oder aber durch Verdampfen im Vakuum auf ein Substrat aufgetragen wird.

Hierbei ist es erfindungsgemäß, daß das Substrat aus Metall, Kunststoff, Keramik, Lack, Textilien, Naturstoffen, wie Holz und Leder, auf Glas, mineralischen Substanzen oder Verbundmaterialien besteht.

Weiterhin umfaßt die Erfindung, daß das Beschichtungsmaterial nach dem Auftragen bei Temperaturen von Raumtemperatur bis 1.200°C, vorzugsweise von Raumtemperatur bis 250°C gehärtet wird, wobei das Härten vorzugsweise thermisch, mit Mikrowellenstrahlung oder I1V-Strahlung erfolgt.

Im Rahmen der Erfindung liegt auch eine Silanbeschichtung, hergestellt durch ein erfindungsgemäßes Verfahren.

Ebenso liegt die Kratzfest-, Antikorrosions-, Easy-to-Clean-, Antifingerprint-, Antireflex-, Antibeschlag-, Verzunderungsschutz-, Diffusionssperr-, Strahlenschutz-Beschichtung oder als selbstreinigende, antibakterielle, antimikrobielle, tribologische oder hydrophile Beschichtung im Rahmen der Erfindung.

Nachfolgend wird die Erfindung anhand von Ausführungsbeispielen näher erläutert.

### Beispiel 1 :

11,8 g Hexandiol werden mit 49,5 g ICTES (Isocyanatopropyltriethoxysilan) auf 50 °C unter Rühren erwärmt und mit 0,1 g Dibutylzinndilaurat versetzt. Es wird 30 min. bei 50 °C weitergerührt und dann auf RT abgekühlt.

5 g Addukt (s. o.) werden in 10 g 1-Methoxy-2-propanol gelöst und mit 0,2 g Aluminiumacetylacetonat versetzt.

Nach Auftragen (z.B. Fluten) auf eine Polycarbonatplatte wird für 50 min. bei 120 °C im Umluftofen gehärtet.

Die erhaltene Schicht zeigt hervorragende Kratzbeständigkeit.

### Beispiel 2:

30,0 g Desmophen 1145 werden mit 4,3 g ICTES (Isocyanatopropyltrieethoxysilan) auf 50 °C erwärmt und mit 0,1 g Dibutylzinndilaurat versetzt. Es wird 1 h bei 50 °C weitergerührt und dann auf RT abgekühlt. 10 g Reaktionsprodukt (s.o.) werden in 8 g 1-Methoxy-2-propanol gelöst und mit 0,1 g Aluminiumacetylacetonat vermischt.

Mit der erhaltenen Beschichtungslösung werden Eisenbleche mittels Spritzapplikation beschichtet und bei 150 °C für 60 min. im Umluftofen gehärtet.

Die Schichten zeigen eine hohe Kratz- und Korrosionsbeständigkeit.

### Beispiel 3:

22,1 g Aminopropyltriethoxysilan werden mit 27,8 g Glycidoxypropyltriethoxysilan bei 45 °C gerührt und für 45 min. bei dieser Temperatur belassen. 10 g des Reaktionsgemisches werden in 12 g Isopropanol gelöst und mit 0,3 g Acetylaceton versetzt.

Nach dem Fluten auf Aluminiumbleche werden die Schichten bei 120 °C für 20 min. im Umluftofen gehärtet.

Die Schichten zeigen eine hohe Kratz- und Korrosionsbeständigkeit.

### Beispiel 4:

24,8 g 3-Methoxypropyltriethoxysilan werden in 12 g 1-Methoxy-2-propanol gelöst und mit 2,5 g Ebecryl 1259 und 2,0 g Desmodur N 3300 versetzt und bei 40°C für 2 h temperiert. Danach wird das Gemisch mit 0,24 g Zirkoniumacetylacetonat versetzt. Das Gemisch wird auf eine PMMA-Platte durch Fluten aufgetragen und mit ca. 2,5 J/cm² mit einer Hg-Mitteldrucklampe bestrahlt und anschließend für 2 h bei 80°C temperiert.

Die Schichten zeigen eine hohe Kratz- und Abriebbeständigkeit bzw. Chemikalienbeständigkeit gegenüber Säuren und Basen.

Merkmale der Erfindung :
1. Verfahren zum Herstellen einer Silanbeschichtung, dadurch gekennzeichnet, daß ein oder mehrere Silane, die nicht oder nur geringfügig vorkondensiert sind, mit einem Reaktionspartner versetzt werden und dann das so entstandene Beschichtungsmaterial auf ein Substrat appliziert und gehärtet wird.
2. Verfahren gemäß 1, dadurch gekennzeichnet, daß die Molekülmasse des bzw. der Silane größer als 200, insbesondere größer als 300, bevorzugt größer als 500 und besonders bevorzugt größer als 1.000 ist.
3. Verfahren gemäß 2, dadurch gekennzeichnet, daß das bzw. die Silane in organischen Seitenketten polarisierte Gruppen aufweisen, die sich zur Ausbildung von Wasserstoffbrückenbindungen eignen.
4. Verfahren gemäß 1, dadurch gekennzeichnet, daß der Dampfdruck des bzw. der Silane kleiner als 2, vorzugsweise kleiner als 1 und besonders bevorzugt kleiner als 0,5 hPa bei 20°C ist.
5. Verfahren gemäß 1, dadurch gekennzeichnet, daß vor dem Härten das bzw. die Silane eine organische Vernetzungsreaktion mit homologen oder nichthomologen Silanen oder mit organischen Monomeren, Oligomeren oder Polymeren durchlaufen.
6. Verfahren gemäß 5 dadurch gekennzeichnet, daß die organische Molekülmasse größer ist als die anorganische.
7. Verfahren gemäß 1, dadurch gekennzeichnet, daß der Wassergehalt maximal 5 %, vorzugsweise maximal 1 % beträgt und besonders bevorzugt die Reaktion ohne Anwesenheit von Wasser durchgeführt wird.
8. Verfahren gemäß 1, dadurch gekennzeichnet, daß das bzw. die Silane maximal zu 5 %, bevorzugt maximal zu 1 % und besonders bevorzugt nicht anorganisch vorvernetzt sind.
9. Verfahren gemäß 1, dadurch gekennzeichnet, daß als Reaktionspartner bis zu 20 %, bevorzugt 0,5 bis 50 % Lewissäuren oder Lewisbasen, insbesondere in Form von Übergangsmetallkomplexen, -salzen oder -partikeln, bevorzugt Mikro- oder Nanopartikeln verwendet werden.
10. Verfahren gemäß 9, dadurch gekennzeichnet, daß die Übergangsmetallkomplexe, -salze oder -partikel Titan-, Aluminium-, Zinn- oder Zirkoniumkomplexe sind.
11. Verfahren gemäß 1, dadurch gekennzeichnet, daß als Füllstoffe Partikel, insbesondere Mikro-, Submikro- oder Nanopartikel zugegeben werden,
12. Verfahren gemäß 1, dadurch gekennzeichnet, daß Lösungsmittel, insbesondere Alkohole, Acetate, Äther oder Reaktionsverdünner, zugesetzt werden.
13. Verfahren gemäß 1, dadurch gekennzeichnet, daß Mattierungsstoffe, Netzdispergiermittel, Entschäumer, Wachse, Biozide, Konservierungsmittel oder Farbpigmente zugesetzt werden.
14. Verfahren gemäß 1, dadurch gekennzeichnet, daß das Beschichtungsmaterial naßchemisch, insbesondere durch Sprühen, Tauchen, Fluten, Rollen, Streichen, Drucken, Schleudern, Rakeln oder aber durch Verdampfen im Vakuum auf ein Substrat aufgetragen wird.
15. Verfahren gemäß 14, dadurch gekennzeichnet, daß das Substrat aus Metall, Kunststoff, Keramik, Lack, Gewebe, Textilien, Naturstoffen, wie Holz oder Leder, auf Glas, mineralischen Substanzen oder Verbundmaterialien besteht.
16. Verfahren gemäß 14, dadurch gekennzeichnet, daß das Beschichtungsmaterial nach dem Auftragen bei Temperaturen von Raumtemperatur bis 1.200°C, vorzugsweise von Raumtemperatur bis 250°C gehärtet wird, wobei das Härten vorzugsweise thermisch, mit Mikrowellenstrahlung oder UV-Strahlung erfolgt.
17. Silanbeschichtung, hergestellt durch ein Verfahren gemäß 1 bis 16.
18. Verwendung der Beschichtung gemäß 17 als Kratzfest-, Antikorrosions-, Easy-to-Clean-, Antifingerprint-, Antireflex-, Antibeschlag-, Verzunderungsschutz-, Diffusionssperr-, Strahlenschutz-Beschichtung oder als selbstreinigende, antibakterielle, antimikrobielle, tribologische oder hydrophile Beschichtung.

## Patentansprüche

1. Verfahren zum Herstellen einer Silanbeschichtung, **dadurch gekennzeichnet, dass** ein Silan ausgewählt aus der Gruppe, bestehend aus 3-Aminopropyltriethoxysilan, Aminoethylaminpropyltrimethoxysilan, Aminoethylaminopropyltrimethoxysilan, Aminoethylaminopropylsilan, 3-Aminopropyltrimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyldimethoxysilan, N-Cyclohexyl-3-aminopropyltrimethoxysilan, Benzylaminoethylaminopropyltrimethoxysilan, Vinylbenzylaminoethylaminopropyltrimethoxysilan, Vinyltrimethoxysilan, Vinyltriethoxysilan, Vinyldimethoxymethylsilan, Vinyl(tris)methoxyethoxy)silan, Vinylmethoxymethylsilan, Vinyltris(2-methoxyethoxy)silan, Vinyltriacetoxysilan, 3-Glycidoxypropyltrimethoxysilan, 3-Glycidoxypropyltriethoxysilan Glycidoxypropylmethyldiethoxysilan, Mercaptopropyltrimethoxysilan, Bis-Triethoxysilylpropyldisulfidosilan, Bis-Triethoxysilylpropyldisulfidosilan, Bis-Triethoxysilylpropyltetroasulfidosilan, Tetraethoxysilan, N-Cyclohexylaminomethylmethyldieethoxysilan, N-Cyclohexylaminomethyltriethoxysilan, N-Phenylaminomethyltrimethoxysilan, (Methacryloxymethyl)methyldimethoxysilan, Methacryloxymethyltrimethoxysilan, (Methacryloxymethyl)methyldiethoxysilan, Methacryloxymethyltriethoxysilan, 3-Methacryloxypropyltrimethoxysilan, 3-Methacryloxypropyltrimethoxysilan, 3-Methacryloxypropyltriacetoxysilan, (Isocyanatomethyl)methyldimethoxysilan, 3-Trimethoxysilylmethyl-O-methylcarbamat, N-Dimethoxy-(methyl)silylmethyl-O-methyl-carbamat und 3-(Triethoxysilyl)propylbernsteinsäureanhydrid, wobei das Silan maximal zu 5 % anorganisch vorvernetzt ist, mit einem organischen Monomer, Oligomer oder Polymer organisch vernetzt wird, und dann das so entstandene Beschichtungsmaterial auf ein Substrat appliziert und gehärtet wird.

2. Verfahren gemäß Anspruch 1, **dadurch gekennzeichnet, dass** die Molekülmasse des Silans größer als 200, insbesondere größer als 300, bevorzugt größer als 500 und besonders bevorzugt größer als 1.000 ist.

3. Verfahren gemäß Anspruch 2, **dadurch gekennzeichnet, dass** das Silan in organischen Seitenketten polarisierte Gruppen aufweist, die sich zur Ausbildung von Wasserstoffbrückenbindungen eignen.

4. Verfahren gemäß Anspruch 1, **dadurch gekennzeichnet, dass** der Dampfdruck des Silans kleiner als 2, vorzugsweise kleiner als 1 und besonders bevorzugt kleiner als 0,5 hPa bei 20°C ist.

5. Verfahren gemäß Anspruch 1, **dadurch gekennzeichnet, dass** die organische Molekülmasse größer ist als die anorganische.

6. Verfahren gemäß Anspruch 1, **dadurch gekennzeichnet, dass** der Wassergehalt maximal 5 %, vorzugsweise maximal 1 % beträgt und besonders bevorzugt die Reaktion ohne Anwesenheit von Wasser durchgeführt wird.

7. Verfahren gemäß Anspruch 1, **dadurch gekennzeichnet, dass** das Silan maximal zu 1 % und bevorzugt nicht anorganisch vorvernetzt ist.

8. Verfahren gemäß Anspruch 1, **dadurch gekennzeichnet, dass** als Reaktionspartner bis zu 20 %, bevorzugt 0,5 bis 50 % Lewissäuren oder Lewisbasen, insbesondere in Form von Übergangsmetallkomplexen, -salzen oder -partikeln, bevorzugt Mikro- oder Nanopartikeln verwendet werden.

9. Verfahren gemäß Anspruch 8, **dadurch gekennzeichnet, dass** die Übergangsmetallkomplexe, -salze oder -partikel Titan-, Aluminium-, Zinn- oder Zirkoniumkomplexe sind.

10. Verfahren gemäß Anspruch 1, **dadurch gekennzeichnet, dass** als Füllstoffe Partikel, insbesondere Mikro-, Submikro- oder Nanopartikel zugegeben werden.

11. Verfahren gemäß Anspruch 1, **dadurch gekennzeichnet, dass** Lösungsmittel, insbesondere Alkohole, Acetate, Äther oder Reaktionsverdünner, zugesetzt werden.

12. Verfahren gemäß Anspruch 1, **dadurch gekennzeichnet, dass** Mattierungsstoffe, Netzdispergiermittel, Entschäumer, Wachse, Biozide, Konservierungsmittel oder Farbpigmente zugesetzt werden.

13. Verfahren gemäß Anspruch 1, **dadurch gekennzeichnet, dass** das Beschichtungsmaterial nasschemisch, insbesondere durch Sprühen, Tauchen, Fluten, Rollen, Streichen, Drucken, Schleudern, Rakeln oder aber durch Verdampfen im Vakuum auf ein Substrat aufgetragen wird.

14. Verfahren gemäß Anspruch 13, **dadurch gekennzeichnet, dass** das Substrat aus Metall, Kunststoff, Keramik, Lack, Gewebe, Textilien, Naturstoffen, wie Holz oder Leder, aus Glas, mineralischen Substanzen oder Verbundmaterialien besteht.

15. Verfahren gemäß Anspruch 13, **dadurch gekennzeichnet, dass** das Beschichtungsmaterial nach dem Auftragen bei Temperaturen von Raumtemperatur bis 1.200°C, vorzugsweise von Raumtemperatur bis 250°C gehärtet wird, wobei das Härten vorzugsweise thermisch, mit Mikrowellenstrahlung oder UV-Strahlung erfolgt.

16. Silanbeschichtung, hergestellt durch ein Verfahren gemäß der Ansprüche 1 bis 15.

17. Verwendung der Beschichtung gemäß Anspruch 16 als Kratzfest-, Antikorrosions-, Easy-to-Clean-, Antifingerprint-, Antireflex-, Antibeschlag-, Verzunderungsschutz-, Diffusionssperr-, Strahlenschutz-Beschichtung oder als selbstreinigende, antibakterielle, antimikrobielle, tribologische oder hydrophile Beschichtung.
